# EUROPEAN PATENT APPLICATION

(11) **EP 4 546 480 A1**
(43) Date of publication of application: **30.04.2025**
(21) Application number: 23830708.6
(22) Date of filing: 10.02.2023
(51) Int. Cl.: H01M 10/0525, H01M 4/131, H01M 4/133, H01M 4/36, H01M 4/505, H01M 4/525, H01M 4/587, H01M 10/0567, H01M 10/0568, H01M 10/0569

(54) **LITHIUM ION SECONDARY BATTERY**

(30) Priority: 27.06.2022 JP 2022102494
(71) Applicant: Vehicle Energy Japan Inc., Ibaraki 312-8505 (JP)
(72) Inventor: HARADA, Motoko, Hitachinaka-shi, Ibaraki 312-8505 (JP); TACHIKAWA, Yusuke, Hitachinaka-shi, Ibaraki 312-8505 (JP); INABA, Akira, Hitachinaka-shi, Ibaraki 312-8505 (JP); MIKI, Takeshi, Hitachinaka-shi, Ibaraki 312-8505 (JP); KURIHARA, Yoshiki, Tokyo 100-8251 (JP)
(74) Representative: Strehl & Partner mbB
(86) International application number: PCT/JP2023/004562
(87) International publication number: WO 2024/004252

(57) **Abstract**

A lithium ion secondary battery includes a positive electrode, a negative electrode, and an electrolytic solution, in which the negative electrode includes a current collector and a negative electrode active material layer disposed on at least one side of the current collector, the negative electrode active material layer includes a negative electrode active material including graphite particles and amorphous carbon fine particles, the electrolytic solution includes at least a non-aqueous solvent, an electrolyte salt, and an additive, and the additive includes a fluorosulfonate and a methoxysulfonate. Consequently, it is possible to achieve both an improvement in power characteristics and an improvement in high temperature storage characteristics in a low SOC range in the lithium ion secondary battery.

## Description

### Technical Field

The present disclosure relates to a lithium ion secondary battery.

### Background Art

In the automobile industry, fuel efficiency regulations and environmental regulations are being strengthened in each country and region. In order to comply with these regulations, technological development of electric vehicles that do not emit carbon dioxide and that use batteries as a power source and fuel cell vehicles that use hydrogen as a fuel source are attracting attention. However, there are problems with the electric vehicles, such as insufficient charging infrastructure and a longer time required for charging compared to refueling, and there are problems with the fuel cell vehicles, such as a high cost required for infrastructure improvement of hydrogen stations, and a high cost of fuel cells. Therefore, PHEVs (Plug-in Hybrid Electric Vehicles) and HEVs (Hybrid Electric Vehicles), which use both an internal combustion engine and a battery as power sources and emit less carbon dioxide, are being strong candidates for meeting the fuel efficiency regulations and the environmental regulations.

A lithium ion secondary battery is commonly used in the PHEVs and HEVs. Patent Literature 1 describes a lithium ion secondary battery, in which a non-aqueous electrolytic solution includes at least one compound selected from the group consisting of lithium fluorophosphate, lithium bis(fluorosulfonyl)imide and lithium difluorophosphate together with an electrolyte and a non-aqueous solvent, and a negative electrode includes a negative electrode active material including Si or a Si metal oxide and graphite particles. Patent Literature 2 describes a lithium ion secondary battery, in which a non-aqueous electrolytic solution includes lithium hexafluorophosphate (LiPF₆) as an electrolyte, and further includes vinylene carbonate (VC), lithium bis(oxalate)borate (LiBOB) and lithium difluoro(oxolato)borate (LiDFOB) as an additive.

### Citation List

### Patent Literature

[Patent Literature 1] Japanese Patent Application Laid-Open No. 2021-106174
[Patent Literature 2] Japanese Patent Application Laid-Open No. 2020-167054

### Summary of Invention

### Technical Problem

In the PHEVs or HEVs, there is a demand for a lithium ion secondary battery in which the resistance increase is small even in a range where a charge rate (SOC (State of Charge)) is low, and stable power is supplied, and the capacity decrease and the resistance increase can be suppressed even in a long-term high temperature storage environment.

The techniques described in Patent Literatures 1 and 2 are not intended to achieve both an improvement in power characteristics and an improvement in high temperature storage characteristics in a low SOC range, and a technique for achieving both of these is required.

It is a main object of the present disclosure to provide a lithium ion secondary battery capable of achieving both an improvement in the power characteristics in the low SOC range and an improvement in the high temperature storage characteristics.

### Solution to Problem

A lithium ion secondary battery of the present disclosure includes a positive electrode, a negative electrode, and an electrolytic solution, in which the negative electrode includes a current collector and a negative electrode active material layer disposed on at least one side of the current collector, the negative electrode active material layer includes a negative electrode active material containing graphite particles and amorphous carbon fine particles, the electrolytic solution includes at least a non-aqueous solvent, an electrolyte salt, and an additive, and the additive includes a fluorosulfonate and a methoxysulfonate.

### Advantageous Effects of Invention

According to the present disclosure, it is possible to provide a lithium ion secondary battery capable of achieving both an improvement in power characteristics and an improvement in high temperature storage characteristics in a low SOC range.

### Brief Description of Drawings

Figure 1 is an external perspective view of a lithium ion secondary battery according to an embodiment.
Figure 2 is an exploded perspective view of a lithium ion secondary battery according to the embodiment.
Figure 3 is an exploded perspective view showing a state in which a part of a wound group according to the embodiment is unfolded.

Figure 4 is a conceptual diagram showing a mixed state of graphite particles (A) and graphite particles (B) on which amorphous carbon fine particles are supported in a negative electrode active material layer according to an embodiment.

### Description of Embodiments

Hereinafter, embodiments will be described with reference to the drawings as appropriate. The following description shows specific examples of the contents of the present disclosure, and the present disclosure is not limited to these descriptions, and various changes and modifications can be made by those skilled in the art within the scope of the technical idea disclosed in the present specification. In addition, in all the drawings for explaining the present disclosure, those having the same function are denoted by the same reference numerals, and repeated explanations thereof may be omitted. Further, the dimensional ratios in the drawings may be different from the actual ratios for convenience of explanation, or a part of the members may be omitted from the drawings. Furthermore, in the present application, the numerical range represented by the symbol "-" includes each of the numerical values described before and after the symbol "-" as the lower limit value and the upper limit value.

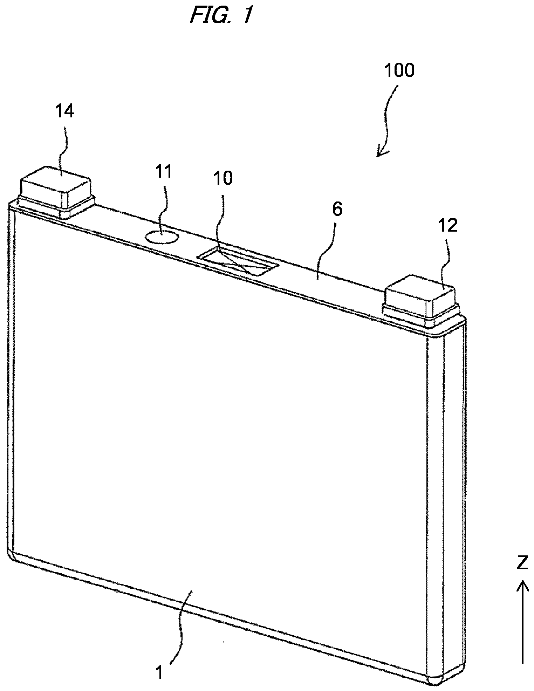

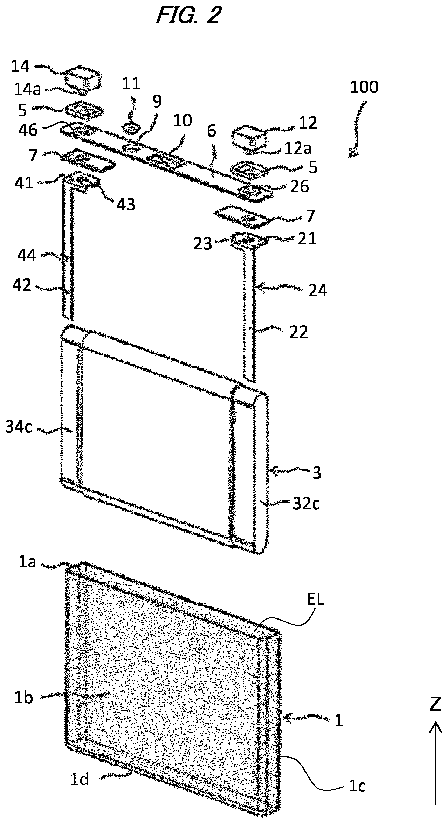

A lithium ion secondary battery 100 according to an embodiment shown in Figures 1 and 2 includes a battery can 1 and a battery lid 6. The battery can 1 has a rectangular bottom surface 1d, a side surface including a pair of opposed wide side surface 1b having a relatively large area and a pair of opposed narrow side surface 1c having a relatively small area, the side surface rising from the bottom surface 1d, and an opening 1a opened upward at an upper end of the wide side surface 1b and the narrow side surface 1c. Here, "upward" means the Z direction in Figures 1 and 2.

The opening 1a of the battery can 1 is sealed by the battery lid 6. The battery lid 6 has a substantially rectangular flat plate shape and is welded so as to close the opening 1a of the battery can 1 to seal the battery can 1.

The battery lid 6 is integrally provided with a gas discharge valve 10. When the pressure in the battery can 1 increases, the gas discharge valve 10 is cleaved and the gas is discharged from the inside of the battery can 1, and the pressure in the battery can 1 decreases. This ensures a safety of the lithium ion secondary battery 100.

A liquid injection port 9 for injecting an electrolytic solution into the battery can 1 is formed in the battery lid 6. The liquid injection port 9 is sealed by a liquid injection port plug 11 after the electrolytic solution is injected into the battery can 1. The liquid injection port plug 11 is joined to the battery lid 6 by laser welding to seal the liquid injection port 9, thereby sealing the lithium ion secondary battery 100 hermetically.

Further, a positive electrode side through hole 46 and a negative electrode side through hole 26 are formed in the battery lid 6.

A positive external terminal 14 and a negative external terminal 12 are provided above the battery lid 6. A positive collector plate 44 and a negative collector plate 24 are provided below the battery lid 6 and inside the battery can 1.

Examples of a material for forming the positive external terminal 14 and the positive collector plate 44 include an aluminum alloy, and examples of a material for forming the negative external terminal 12 and the negative collector plate 24 include a copper alloy.

The positive external terminal 14 and the negative external terminal 12 each have a weld joint portion to which a bus bar or the like is to be welded. The welded joint has a cuboidal block shape protruding upward from the battery lid 6. The lower surface of the welded joint faces the surface of the battery lid 6, and the upper surface of the welded joint is positioned at a predetermined height and is substantially parallel to the battery lid 6.

The positive collector plate 44 has a rectangular plate-shaped positive current collector plate base 41 opposed to the lower surface of the battery lid 6, and a positive connection end 42 extending from the side end of the positive current collector plate base 41 toward the bottom surface 1d side along the wide side surface 1b of the battery can 1. Similarly, the negative collector plate 24 has a rectangular plate-shaped negative current collector plate base 21 opposed to the lower surface of the battery lid 6, and a negative connection end 22 extending from the side end of the negative current collector plate base 21 toward the bottom surface 1d along the wide side surface 1b of the battery can 1. A positive electrode side opening hole 43 and a negative electrode side opening holes 23 are formed in the positive current collector plate base 41 and the negative current collector plate base 21, respectively.

A positive electrode connecting portion 14a and the negative electrode connecting portion 12a are provided so as to protrude from the lower surfaces of the positive external terminal 14 and the negative external terminal 12, respectively. The positive electrode connecting portion 14a and the negative electrode connecting portion 12a are formed integrally with the positive external terminal 14 and the negative external terminal 12, respectively.

The positive electrode connecting portion 14a has a cylindrical shape that can be inserted into the positive electrode side through hole 46 of the battery lid 6 and the positive electrode side opening hole 43 of the positive current collector plate base 41. Similarly, the negative electrode connecting portion 12a has a cylindrical shape that can be inserted into the negative electrode side through hole 26 of the battery lid 6 and the negative electrode side opening hole 23 of the negative current collector plate base 21. The positive electrode connecting portion 14a passes through the positive electrode side through hole 46 of the battery lid 6 and the positive electrode side opening hole 43 of the positive current collector plate base 41, and passes through the battery lid 6 and the positive current collector plate base 41. The positive external terminal 14 and the positive collector plate 44 are electrically connected to each other via the positive electrode connecting portion 14a, and are fixed to the battery lid 6. Similarly, the negative electrode connecting portion 12a passes through the negative electrode side through hole 26 of the battery lid 6 and the negative electrode side opening hole 23 of the negative current collector plate base 21, and passes through the battery lid 6 and the negative current collector plate base 21. The negative external terminal 12 and the negative collector plate 24 are electrically connected to each other via the negative electrode connecting portion 12a, and are fixed to the battery lid 6.

The positive external terminal 14 is electrically connected to a wound group 3, which will be described later, via the positive electrode connecting portion 14a and the positive collector plate 44. Similarly, the negative external terminal 12 is electrically connected to the wound group 3 via the negative electrode connecting portion 12a and the negative collector plate 24. When the lithium ion secondary battery 100 is charged, electricity is supplied from an external power source to the wound group 3 via the positive external terminal 14, the positive electrode connecting portion 14a, the positive collector plate 44, and the negative external terminal 12, the negative electrode connecting portion 12a, and the negative collector plate 24. When the lithium ion secondary battery 100 is discharged, electricity is supplied from the wound group 3 to the external loads via the positive external terminal 14, the positive electrode connecting portion 14a, the positive collector plate 44, and the negative external terminal 12, the negative electrode connecting portion 12a, and the negative collector plate 24.

In order to electrically insulate the positive collector plate 44, the negative collector plate 24, the positive external terminal 14, and the negative external terminal 12 from the battery lid 6, respectively, a gasket 5 is provided between each of the positive external terminal 14 and the negative external terminal 12 and the battery lid 6, and an insulating plate 7 is provided between each of the positive collector plate 44 and the negative collector plate 24 and the battery lid 6. Examples of a material of the insulating plate 7 and the gasket 5 include insulating resin materials such as polybutylene terephthalate, polyphenylene sulfide, and perfluoroalkoxy fluororesin.

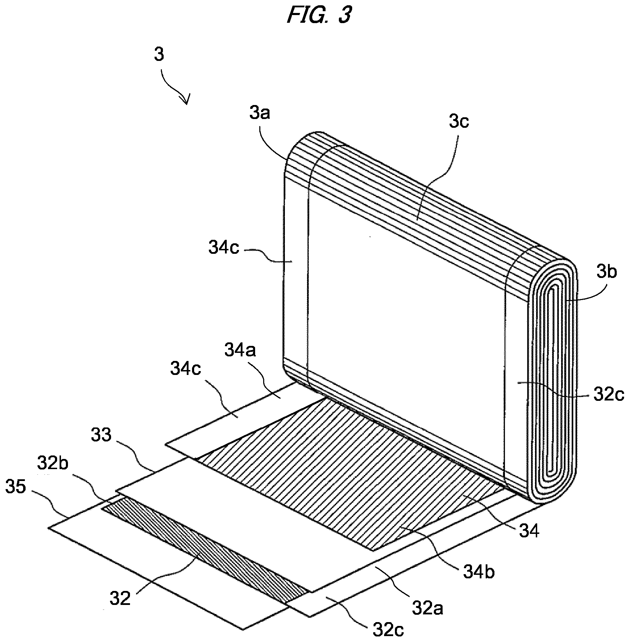

An electrolytic solution EL and the wound group 3 are contained in the battery can 1. The electrolytic solution EL is injected into the battery can 1 through the liquid injection port 9. As shown in Figure 3, the wound group 3 includes a negative electrode 32, a positive electrode 34, and two separators 33 and 35. The separator 35, the negative electrode 32, the separator 33, and the positive electrode 34 are stacked in this order and wound in a flat shape. The separator 35 is located on the outermost periphery of the wound group 3, and the negative electrode 32 is located on the inner side thereof. The two separators 33 and 35 electrically insulate the positive electrode 34 and the negative electrode 32 from each other.

The wound group 3 has a pair of opposed end face 3a, 3b perpendicular to a winding axis and a side face 3c between the pair of end face 3a, 3b. The side surface 3c has a pair of curved portions opposed to each other having a semicircular cross section, and a flat portion continuously formed between the pair of curved portions. The wound group 3 is arranged in the battery can 1 such that the flat portion of the side surface 3c and the wide side surface 1b of the battery can 1 are substantially parallel to each other.

Hereinafter, a main part of the lithium ion secondary battery 100 according to the embodiment will be described with a focus on the positive electrode 34, the negative electrode 32, and the electrolytic solution EL. A "positive electrode mixture layer" corresponds to the "positive electrode active material layer" according to the present disclosure, and a "negative electrode mixture layer" corresponds to the "negative electrode active material layer" according to the present disclosure.

### <Positive Electrode>

The positive electrode 34 includes a positive current collector 34a and a positive electrode mixture layer 34b (positive electrode active material layer) provided on at least one surface, preferably both surfaces, of the positive current collector 34a. In the description of the positive electrode, the "positive current collector" may be simply referred to as a "current collector".

The positive current collector 34a is formed of any material that is highly conductive and does not alloy with lithium ions. The positive current collector 34a may have a plate-like (sheet-like) shape. As the positive current collector 34a, for example, a positive electrode foil can be used, and specifically, a metallic foil such as an aluminum foil can be used. A portion 34c that is not covered with the positive electrode mixture layers 34b (hereinafter, referred to as a "positive current collector exposed portion") is provided at an end portion of the positive current collector 34a on one side in the width direction. The positive current collector exposed portion 34c is provided on the end face 3a of the wound group 3 and in the vicinity thereof. The positive current collector exposed portion 34c faces the positive connection end 42 of the positive collector plate 44 and is electrically connected thereto.

The positive electrode material mixture 34b includes a positive electrode active material. The positive electrode active material includes, for example, a ternary material containing at least nickel, cobalt, and manganese, and specifically, a composite oxide of nickel, cobalt, and manganese can be used. As the positive electrode active material, a ternary lithium-containing composite oxide represented by the following general composition formula (1) is preferably used.

Li₁₊ₓM^{A}O₂ (1)

(Wherein X satisfies -0.15 ≤ X ≤ 0.15, and M^{A} represents an element group containing at least one selected from the group consisting of Mn and Al, Ni, and Co.)

The ternary lithium-containing composite oxide represented by the general composition formula (1) has high thermal stability and stability in a high potential state, and the safety of the lithium ion secondary battery and various battery characteristics can be enhanced by applying the oxide.

The positive electrode material mixture 34b may further include at least one, preferably both, of a conductive auxiliary agent and a binder.

The conductive auxiliary agent is not particularly limited, and for example, a carbon-based material can be used. The carbon-based material may be crystalline carbon, amorphous carbon, or mixtures thereof. Examples of the crystalline carbon include artificial graphite, natural graphite (e.g., scaly graphite), or mixtures thereof. Examples of the amorphous carbon include carbon black (e.g., acetylene black, Ketjen black, channel black, furnace black, lamp black, thermal black, or mixtures thereof).

Examples of the binder include, but are not limited to them, polyvinylidene fluoride (PVdF), polytetrafluoroethylene (PTFE), polyethylene, polystyrene, polybutadiene, polyacrylonitrile, polyvinyl fluoride, polypropylene fluoride, polychloroprene fluoride, butyl rubber, nitrile rubber, styrene butadiene rubber (SBR), polysulfide rubber, nitrocellulose, cyanoethyl cellulose, various latexes, acrylic resins, and mixtures thereof.

The positive electrode 34 can be formed, for example, as follows. The positive electrode active material, and optionally at least one of a conductive auxiliary agent and a binder, are dispersed in a solvent (e.g., N-methyl-2-pyrrolidone (NMP), water) to prepare a paste-like or slurry-like positive electrode mixture composition. The positive electrode mixture composition is applied to the surface (one side or both sides) of the positive current collector 34a, and dried, and subjected to calendering as necessary to form the positive electrode mixture layer 34b. Thereby, the positive electrode 34 is obtained. However, the positive electrode is not limited to those manufactured by the above-described manufacturing method, and may be manufactured by another method.

### <Negative Electrode>

The negative electrode 32 includes a negative current collector 32a and a negative electrode mixture layer 32b (negative electrode active material layer) provided on at least one surface, preferably both surfaces, of the negative current collector 32a. In the description of the negative electrode, the "negative current collector" may be simply referred to as a "current collector".

The negative current collector 32a is formed of any material that is highly conductive and does not alloy with lithium ions. A portion 32c that is not covered with the negative electrode mixture layers 32b (hereinafter referred to as a "negative current collector exposed portion") is provided at one end portion of the negative current collector 32a in the width direction. The negative current collector exposed portion 32c is provided on the end face 3b of the wound group 3 and in the vicinity thereof. The negative current collector exposed portion 32c faces and is electrically connected to the negative connection end 22 of the negative collector plate 24.

The portion of the negative electrode 32 to which the negative electrode mixture layer 32b is applied is preferably larger in the width direction than the portion of the positive electrode 34 to which the positive electrode mixture layer 34b is applied, so that the portion to which the positive electrode mixture layer 34b is applied is sandwiched between the portions to which the negative electrode mixture layer 32b is applied. In one preferred mode, the positive current collector exposed portion 34c and the negative current collector exposed portion 32c are respectively bundled at the flat portion and connected by welding or the like. In addition, the separators 33 and 35 are wider in the width direction than the portion to which the negative electrode mixture layers 32b are applied. However, since the separators 33 and 35 are wound at positions where the current collectors at the end portions of the positive current collector exposed portion 34c and the negative current collector exposed portion 32c are exposed, there is no problem in bundling and welding.

The negative electrode mixture layer 32b includes a negative electrode active material including graphite particles and amorphous carbon fine particles. The negative electrode active material is not particularly limited as long as it contains graphite particles and amorphous carbon fine particles, but the amorphous carbon fine particles are preferably supported on the graphite particles, and among them, graphite particles (A) and graphite particles (B) on which the amorphous carbon fine particles are supported are preferably used as the graphite particles.

The negative electrode mixture layer 32b may further include at least one, preferably both, of a negative electrode additive and a binder in addition to the negative electrode active material. In one aspect of the embodiment, the negative electrode mixture layer 32b includes a negative electrode active material including graphite particles (A) and graphite particles (B) on which amorphous carbon fine particles are supported, and the graphite particles (B) on which amorphous carbon fine particles are supported have an amorphous carbon fine particle number per unit area of 0.4 pieces/µm² or more. In another aspect of the embodiment, the negative electrode mixture layer 32b includes a negative electrode active material and a binder having the negative electrode active material, and the negative electrode active material includes graphite particles and amorphous carbon fine particles. The negative electrode mixture layer 32b may further include a negative electrode additive containing copper oxide.

Examples of the graphite particles include, but are not limited to them, particles of natural graphite and particles of artificial graphite, and particles of natural graphite are preferable. Examples of the natural graphite include scaly graphite, lumpy graphite, and soil graphite. The graphite particles (A) and the graphite particles constituting the graphite particles (B) on which the amorphous carbon fine particles are supported may be the same kind of graphite particles or different kinds of graphite particles.

Examples of the negative electrode active material other than graphite include carbon-based materials such as non-graphitizable carbon (hard carbon) and graphitizable carbon (soft carbon).

As for the graphite, a graphite surface coated with amorphous carbon may be used. Coating with amorphous carbon can prevent reaction with excess electrolyte. Examples of the amorphous carbon include pitch. That is, the graphite particles constituting the graphite particles (A) and the graphite particles (B) on which the amorphous carbon fine particles are supported are preferably graphite particles coated with amorphous carbon, and more preferably, particles of pitch-coated graphite. The graphite particles constituting the graphite particles (A) and the graphite particles (B) on which the amorphous carbon fine particles are supported are particularly preferably natural graphite particles coated with amorphous carbon.

The supported amorphous carbon fine particles constituting the graphite particles (B) on which the amorphous carbon fine particles are supported are not particularly limited, and examples thereof include carbon blacks such as acetylene black, Ketjen black, channels, furnace black, lamp black, and thermal black. Incidentally, the supported amorphous carbon fine particles mean particles of amorphous carbon scattered on the surface of the graphite particles, different from the amorphous carbon coated with graphite particles as described above. The amorphous carbon coated with the graphite particles means amorphous carbon covering the entire surface or a part of the surface of the graphite particles.

The graphite particles (B) on which the amorphous carbon fine particles are supported have the amorphous carbon fine particle number per unit area of 0.4 pieces/µm² or more, preferably the amorphous carbon fine particle number per unit area of 0.4 pieces/µm² to 2.4 pieces/µm², more preferably the amorphous carbon fine particle number per unit area of 0.8 pieces/µm² to 2.0 pieces/µm². Incidentally, when the graphite particles carry a small amount of amorphous carbon fine particles, i.e., the graphite particles on which the amorphous carbon fine particles are supported so that the amorphous carbon fine particle number per unit area is less than 0.4 pieces/µm² do not correspond to the graphite particles (B). The graphite particles on which the amorphous carbon fine particles are supported so that the amorphous carbon fine particle number per unit area is less than 0.4 pieces/µm² may be used as the graphite particles (A).

An average particle diameter of the graphite particles (A) is preferably 4 µm or more and 12 µm or less, and more preferably 5 µm or more and 10 µm or less.

The average particle diameter of the graphite particles (B) on which the amorphous carbon fine particles are supported is preferably 4 µm or more and 12 µm or less, and more preferably 5 µm or more and 10 µm or less. The average particle diameter of the graphite particles (A) and the average particle diameter of the graphite particles (B) on which the amorphous carbon fine particles are supported may be the same or different.

The average particle diameter of the supported amorphous carbon fine particles constituting the graphite particles (B) on which the amorphous carbon fine particles are supported is preferably smaller than the average particle diameter of the graphite particles (A) and the average particle diameter of the graphite particles constituting the graphite particles (B) on which the amorphous carbon fine particles are supported. The average particle diameter of the amorphous carbon fine particles is preferably 0.05 µm or more and 0.5 µm or less, and more preferably 0.1 µm or more and 0.4 µm or less.

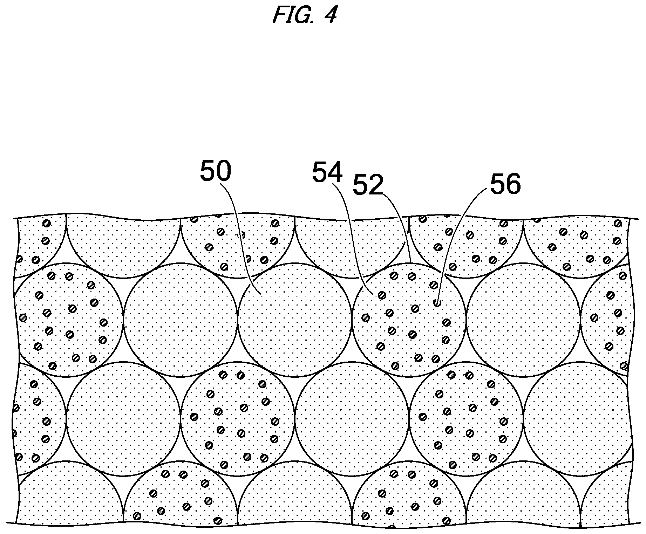

As a negative electrode active material containing graphite particles (A) and graphite particles (B) on which amorphous carbon fine particles are supported, for example, as shown in Figure 4, graphite particles (A) 50 on which amorphous carbon fine particles are not supported and graphite particles (B) 52 on which amorphous carbon fine particles are supported (amorphous carbon fine particles 56 are supported on graphite particles 54) are preferably present in the negative electrode active material layer in a mixed state. In Figure 4, the components constituting the negative electrode active material layer other than the graphite particles (A) and the graphite particles (B) on which the amorphous carbon fine particles are supported are omitted.

When the negative electrode active material includes graphite particles (A) and graphite particles (B) on which amorphous carbon fine particles are supported, the mass ratio (graphite particles (A) / graphite particles (B) on which amorphous carbon fine particles are supported) thereof is preferably 0.25 or more and 5 or less, and more preferably 0.5 or more and 2 or less.

Further, as the negative electrode active material, for example, a material obtained by mixing carbon black such as acetylene black, Ketjen black, channel black, furnace black, lamp black, and thermal black with a graphite material as a conductive auxiliary agent, a material composited by mixing the conductive auxiliary agent with a graphite material and then coating with amorphous carbon, or a material obtained by mixing non-graphitizable carbon (hard carbon) and graphitizable carbon (soft carbon) with a graphite material may be used. The shape of the negative electrode active material is not particularly limited, and may have, for example, a spherical shape, a scaly shape, a fibrous shape, or a shape obtained by pulverizing them.

As a result of intensive studies, the present inventors have found that a lithium ion secondary battery can reduce the internal resistance in a wide range from a low SOC range to a high SOC range while securing the capacity of the battery by using a negative electrode active material including graphite particles (A) and graphite particles (B) on which amorphous carbon fine particles are supported, and thus has high power and good storage properties.

Also, as a result of intensive studies, the present inventors have found that the negative electrode active material includes a negative electrode active material including graphite particles and amorphous carbon fine particles, and the negative electrode active material layer includes a negative electrode active material and a binder that has the negative electrode active material, so that the lithium ion secondary battery can reduce the internal resistance in a wide range from a low SOC range to a high SOC range while securing the capacity of the battery, and thus has high power and good storage properties.

The negative electrode active material layer preferably contains copper oxide as a negative electrode additive. The negative electrode active material layer contains the copper oxide in 0.5 mass% or more and 15 mass% or less with respect to the total 100 mass% of the negative electrode active material and the copper oxide, more preferably. Thereby, the lithium ion secondary battery can secure the capacity of the battery and reduce the inner resistance in a wide range of from the low SOC range to the high SOC range, and thus have a high power and have good storage properties.

Copper oxide is included as a negative electrode additive. The copper oxide may be copper (I) oxide (Cu₂O), copper (II) oxide (CuO), or mixtures thereof. That is, the copper oxide may be at least one kind of copper oxide selected from Cu₂O and CuO. The negative electrode additive may be particulate. The shape of the particulate negative electrode additive is not particularly limited, and may have, for example, a spherical shape, a scaly shape, a fibrous shape, or a shape obtained by pulverizing these. The particulate negative electrode additive may be a particle containing copper (I) (Cu₂O), copper (II) (CuO), or mixtures thereof, or may be a particle consisting essentially of copper (I) (Cu₂O), copper (II) (CuO), or mixtures thereof. These various particulate negative electrode additives may be used singly or in combination.

In the negative electrode mixture layer 32b, the negative electrode active material and the negative electrode additive may be present as separate particles that are not combined with each other. Accordingly, the negative electrode active materials can be electrically connected to each other without being inhibited by the negative electrode additive having high electrical resistance, and an increase in the internal resistance of the lithium ion secondary battery can be suppressed. The negative electrode additive may have an average particle diameter smaller than the average particle diameter of the negative electrode active material, and may have the average particle diameter of 1 µm to 10 µm. Accordingly, the negative electrode active materials can be electrically connected to each other without being inhibited by the negative electrode additive having high electrical resistance, and thus an increase in the internal resistance of the lithium ion secondary battery can be suppressed. The average particle diameter of the negative electrode active material (e.g., graphite particles, amorphous carbon fine particles, etc.) and the negative electrode additive is determined based on a SEM observed image.

As the binder of the negative electrode mixture layer 32b, the same materials as those exemplified as those that can be used as the binder of the positive electrode mixture layer 34b can be used.

The negative electrode mixture layer 32b may further include a dispersant. As the dispersant, carboxymethylcellulose (CMC) can be used.

The negative electrode 32 can be formed as follows, for example. First, a negative electrode additive including a negative electrode active material and copper oxide, a binder, and optionally a dispersant are prepared. The negative electrode active material and the negative electrode additive may be in a particulate form. The negative electrode active material and the negative electrode additive may be separate particles that are not combined with each other. The negative electrode active material, the negative electrode additive, the binder, and optionally the dispersant are dispersed in a solvent (e.g., N-methyl-2-pyrrolidone (NMP)) to prepare a paste-like or slurry-like negative electrode mixture composition. The negative electrode mixture is applied to the surface (one side or both sides) of the negative current collector 32a, dried, and optionally subjected to calendering to form a negative electrode mixture layer 32b. As a result, the negative electrode 32 is obtained. However, the negative electrode is not limited to the negative electrode formed by the above-described method, and may be formed by another method.

### <Electrolytic solution>

The electrolytic solution (non-aqueous electrolytic solution) EL of the lithium ion secondary battery 100 includes at least a non-aqueous solvent, an electrolyte salt, and an additive, and the additive includes a fluorosulfonate and a methoxysulfonate. When the electrolytic solution contains a fluorosulfonate salt and a methoxysulfonate salt as an additive together with a non-aqueous solvent and an electrolyte salt, a protective film called SEI (Solid Electrolyte Interface) formed on the surface of the negative electrode active material of the negative electrode is strengthened, and a side reaction occurring at an interface between the electrolytic solution and the negative electrode active material are suppressed even in a high temperature storage environment. Therefore, by using this electrolyte in combination with the above-described negative electrode, both the improvement of the power characteristics in the low SOC range and the improvement of the high temperature storage characteristics can be achieved.

Hereinafter, the additive, the electrolyte salt, and the non-aqueous solvent according to the embodiment will be described in detail.

### 1. Additive

Additives include fluorosulfonates and methoxysulfonates. Here, a description will be given fluorosulfonate and methoxysulfonate.

### a. Fluorosulfonate

The fluorosulfonate is represented by the following general composition formula (2).

X₁(FSO₃)ₙ (2)

(Where X₁ represents a counter cation of the fluorosulfonate and n represents the valence of the counter cation.)

The counter cation of the fluorosulfonate is not particularly limited, and examples thereof include lithium, sodium, and potassium.

Specific examples of the fluorosulfonate include lithium fluorosulfonate (FSO₃Li), sodium fluorosulfonate, and potassium fluorosulfonate, and lithium fluorosulfonate is particularly preferable. The lithium fluorosulfonate is represented by the following structural formula (2-1).

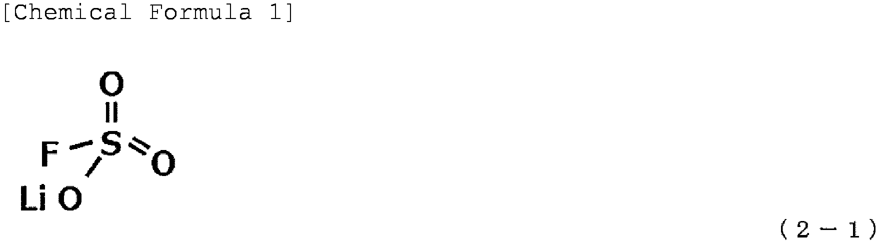

One kind of the fluorosulfonate may be used singly, or two or more kinds may be used in combination in any ratio. The content of the fluorosulfonate contained in the electrolytic solution is, for example, 0.001 mass% or more, preferably 0.1 mass% or more, and more preferably 0.3 mass% or more. The content of the fluorosulfonate contained in the electrolytic solution is, for example, 3 mass% or less, preferably 2 mass% or less, and more preferably 1.5 mass% or less. In such a range, the effect of improving the high temperature storage characteristics of the lithium ion secondary battery can be easily exhibited, and swelling of the battery due to an increase in the gas generation amount can be avoided.

### b. Methoxysulfonate

The methoxysulfonate is represented by the following general composition formula (3).

X₂(CH₃OSO₃)ₘ (3)

(Where X₂ represents a counter cation of methoxysulfonate and m represents the valence of the counter cation.)

The counter cation of the methoxysulfonate is not particularly limited, and examples thereof include lithium, sodium, and potassium.

Specific examples of the methoxysulfonate include lithium methoxysulfonate (CH₃OSO₃Li), sodium methoxysulfonate, potassium methoxysulfonate, and the like, and lithium methoxysulfonate is particularly preferable. The lithium methoxysulfonate is represented by the following structural formula (3-1).

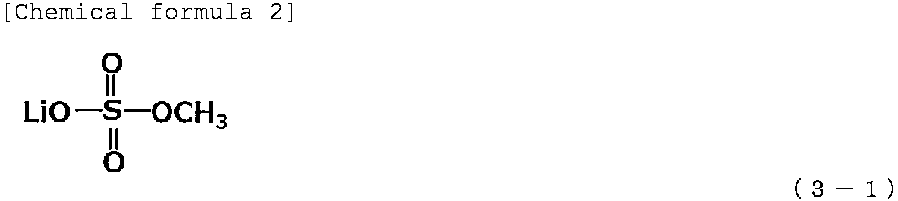

As the methoxysulfonate, one kind may be used singly, or two or more kinds may be used in combination in any ratio. The content of the methoxysulfonate (for example, lithium methoxysulfonate) contained in the electrolytic solution is, for example, 0.001 mass% or more, and preferably 0.1 mass% or more. The content of the methoxysulfonate (for example, lithium methoxysulfonate) contained in the electrolytic solution is, for example, 1 mass% or less, preferably 0.8 mass% or less, and more preferably 0.5 mass% or less. In such a range, the effect of improving the high temperature storage characteristics of the lithium ion secondary battery can be easily exhibited, and can be uniformly dissolved in the electrolytic solution.

### c. Others

The additive is not particularly limited as long as it contains a fluorosulfonate and a methoxysulfonate, but is preferably one containing a lithium borate and a difluorophosphate, and more preferably one containing a vinylene carbonate compound.

### (a) Lithium Borate

Specific examples of the lithium borate include lithium bis(oxalate)borate (LiBOB) and lithium difluoro(oxolato)borate (LiDFOB), and LiBOB is particularly preferable. The lithium bis(oxalate)borate (LiBOB) is represented by the following structural formula (4-1). The lithium difluoro(oxolato)borate (LiDFOB) is represented by the following structural formula (4-2).

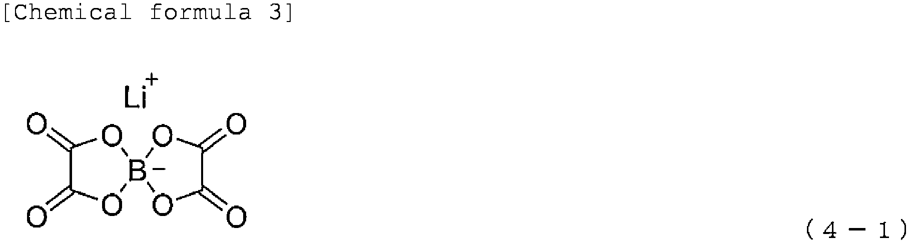

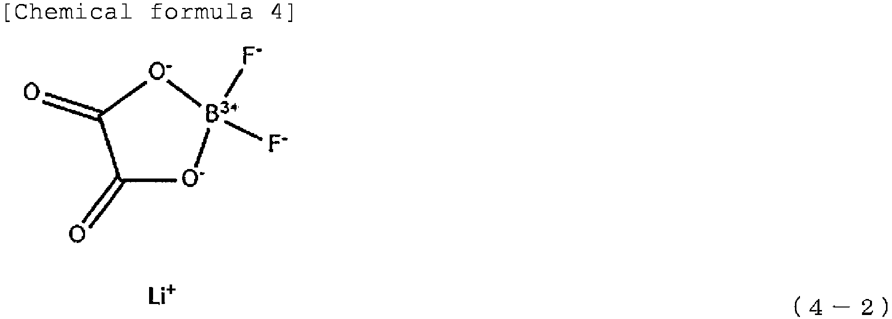

One kind of lithium borate may be used singly, or two or more kinds may be used in combination in any ratio. The content of the lithium borate contained in the electrolyte is, for example, 0.001 mass% or more, preferably 0.1 mass% or more, and more preferably 0.4 mass% or more. The content of the lithium borate contained in the electrolytic solution is, for example, 3 mass% or less, preferably 2 mass% or less, and more preferably 1 mass% or less. In such a range, the effect of improving the high temperature storage characteristics of the lithium ion secondary battery is likely to be exhibited, and an increase in the negative electrode resistance due to excessive addition can be avoided.

### (b) Difluorophosphate

The difluorophosphate is represented by the following general composition formula (5).

X₃(F₂PO₂)ₖ (5)

(In the formula, X₃ indicates a counter cation of fluorophosphate and k indicates the valence of counter cation.)

Examples of the counter cation of the difluorophosphate include, but are not limited to them, lithium, sodium, and potassium.

Specific examples of the difluorophosphate include lithium difluorophosphate (LiPO₂F₂), sodium difluorophosphate, and potassium difluorophosphate, and lithium difluorophosphate is particularly preferable. The lithium difluorophosphate is represented by the following structural formula (5-1).

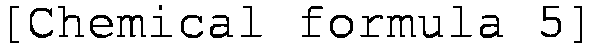

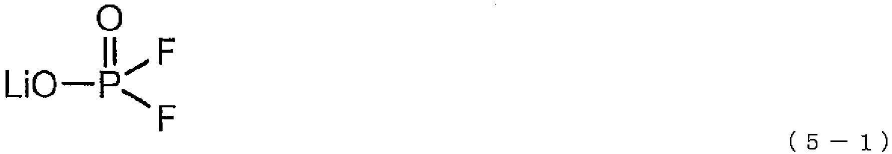

As the difluorophosphate, one kind may be used singly, or two or more kinds may be used in combination in any ratio. The content of the difluorophosphate contained in the electrolyte is, for example, 0.001 mass% or more, preferably 0.1 mass% or more, and more preferably 0.5 mass% or more. The content of the difluorophosphate contained in the electrolytic solution is, for example, 3 mass% or less, preferably 2 mass% or less, and more preferably 1 mass% or less. In such a range, the effect of improving the high temperature storage characteristics of the lithium ion secondary battery is likely to be exhibited.

### (c) Vinylene carbonate compound

Specific examples of the vinylene carbonate compound include vinylene carbonate (1,3-dioxol-2-one), methylvinylene carbonate (4-methyl-1,3-dioxol-2-one), ethylvinylene carbonate (4-ethyl-1,3-dioxol-2-one), and the like.

As the vinylene carbonate compound, one kind may be used singly, or two or more kinds may be used in combination in any ratio. Among them, vinylene carbonate (C₃H₂O₃) is particularly preferable because it is excellent in effectiveness. The vinylene carbonate is represented by the following structural formula (6-1).

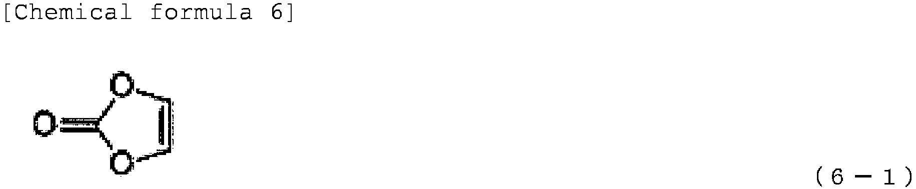

The content of the vinylene carbonate compound contained in the electrolyte is, for example, 0.001 mass% or more, preferably 0.1 mass% or more, and more preferably 0.4 mass% or more. The content of the vinylene carbonate compound contained in the electrolytic solution is, for example, 3 mass% or less, preferably 2 mass% or less, and more preferably 1 mass% or less. In such a range, the effect of improving the high temperature storage characteristics of the lithium ion secondary battery can be easily exhibited, and swelling of the battery due to an increase in the gas generation amount can be avoided.

### 2. Electrolyte Salt

In the electrolytic solution, at least one electrolyte salt is dissolved in a non-aqueous solvent. The electrolyte salt is a lithium salt, and as the lithium salt, for example, a lithium salt containing fluorine (fluorine-containing lithium salt) or the like is preferable. Specific examples of the fluorine-containing lithium salt include inorganic anion salts such as lithium hexafluorophosphate (LiPF₆), lithium tetrafluoroborate (LiBF₄), and organic anion salts such as lithium trifluoromethanesulfonate (LiCF₃SO₃), and LiPF₆ is particularly preferable.

One kind of the lithium salt may be used singly, or two or more kinds may be used in combination in any ratio. The content of the lithium salt contained in the electrolytic solution is arbitrary as long as the effect of the present disclosure is not significantly impaired, but is, for example, 0.01 mass% or more, and preferably 0.1 mass% or more. The content of the lithium salt contained in the electrolytic solution is, for example, 30 mass% or less, and preferably 20 mass% or less.

### 3. Non-aqueous Solvent

The electrolytic solution contains at least one non-aqueous solvent. Specific examples of the non-aqueous solvent include cyclic carbonates, fluorine-containing cyclic carbonates, chain carbonates, and fluorine-containing chain carbonates.

Specific examples of the cyclic carbonate include ethylene carbonate (EC), propylene carbonate (PC), and butylene carbonate (BC). Specific examples of the fluorine-containing cyclic carbonate include fluoroethylene carbonate (FEC). Specific examples of the linear carbonate include dimethyl carbonate (DMC), diethyl carbonate (DEC), and ethyl methyl carbonate (EMC).

One kind of the non-aqueous solvent may be used singly, or two or more kinds may be used in combination in any ratio. The non-aqueous solvent preferably contains at least a cyclic carbonate and a linear carbonate from the viewpoint of balance of dielectric constant and viscosity of the electrolytic solution. Specifically, the non-aqueous solvent preferably contains at least one or more cyclic carbonate solvents and at least one or more chain carbonate solvents. In this case, the content ratio of the cyclic carbonate and the linear carbonate contained in the non-aqueous solvent is preferably from 10 : 90 to 50 : 50 by volume. The non-aqueous solvent preferably contains ethylene carbonate as a cyclic carbonate and ethyl methyl carbonate and dimethyl carbonate as a chain carbonate.

### <Others>

The separators 33 and 35 have an insulating function of preventing a short circuit between the positive electrode 34 and the negative electrode 32 and a function of holding an electrolytic solution. The separators 33 and 35 are not particularly limited, and for example, a porous sheet made of a resin such as polyethylene (PE), polypropylene (PP), polyester, cellulose, or polyamide, or a laminated sheet thereof (for example, a sheet having a three-layer structure of PP/PE/PP) can be used.

A layer including an inorganic material (e.g., alumina particles) and a binder may be provided on one or both surfaces of the separators 33 and 35. Accordingly, even when the lithium ion secondary battery 100 is used in an abnormal state (for example, when the temperature of the lithium ion secondary battery rises to 160 °C or higher due to overcharge, crushing, or the like), the separators 33 and 35 are prevented from melting and the insulating function can be maintained. Therefore, the safety of the lithium ion secondary battery 100 is improved.

If necessary, a shaft core (not shown) may be disposed on the innermost circumference of the wound group 3. As the shaft core, a resin sheet or the like having higher bending rigidity than any of the positive current collector, negative current collector, and separators 33 and 35 can be used.

Optionally, an insulating protective film (not shown) may be wound around the wound group 3. The insulating protective film is, for example, but not limited to them, one sheet or a plurality of film members made of a synthetic resin such as PP (polypropylene), and has a length that can be wound in a direction parallel to the flat surface of the wound group 3 and in a direction perpendicular to the winding axial direction as a winding center.

### [Examples]

Hereinafter, the present disclosure will be described in detail with reference to Examples, but the present disclosure is not limited to these Examples.

### [Example 1]

First, Li_{1.0}Ni_{0.33}Co_{0.33}Mn_{0.33}O₂ powder was prepared as a positive electrode active material, acetylene black was prepared as a conductive auxiliary agent, and polyvinylidene fluoride (PVdF) was prepared as a binder.

Next, the positive electrode active material, the conductive auxiliary agent, and the binder were mixed at a mass ratio of 90 : 5 : 5. N-methyl-2-pyrrolidone (NMP) was added to the resulting mixture to adjust the viscosity to obtain a positive electrode slurry (slurry-like positive electrode mixture).

Next, an aluminum foil having a thickness of 15 micrometers was prepared as the positive current collector 34a. Next, an uncoated portion serving as a welded portion (positive current collector exposed portion 34c) was left on both surfaces of the positive current collector 34a, and a layer of the positive electrode slurry was formed by a simultaneous application of two layers using the positive electrode slurry by a slot die coating method. Next, the layer of the positive electrode slurry was dried and pressed to form a positive electrode mixture layer 34b, and a positive electrode 34 shown in Figure 3 was produced.

Subsequently, as the negative electrode active material, natural graphite particles coated with amorphous carbon (negative electrode active material A), and natural graphite particles coated with amorphous carbon (negative electrode active material B) on which amorphous carbon fine particles were supported, styrene-butadiene rubber (SBR) as a binder, and carboxymethyl cellulose (CMC) as a dispersant were prepared.

Next, the negative electrode active material A, the negative electrode active material B, the binder, and the dispersion were mixed so that the total of the negative electrode active material A and the negative electrode active material B : binder : dispersant were in a mass ratio of 98 : 1 : 1. The contents (total of 98 mass%) and specifications of the negative electrode active material A and the negative electrode active material B are shown in Table 1 below. The viscosity was adjusted by adding ionexchanged water to the obtained mixture, and then a negative electrode slurry (slurry-like negative electrode mixture composition) was obtained.

Next, a copper foil having a thickness of 10 µm was prepared as the negative current collector 32a. Next, an uncoated portion serving as a welded portion (negative current collector exposed portion 32c) was left on both surfaces of the negative current collector 32a, and a layer of the negative electrode slurry was formed by the simultaneous application of two layers using the negative electrode slurry by the slot die coating method. Next, a layer of the negative electrode slurry was dried and pressed to form a negative electrode mixture layer 32b, and a negative electrode 32 shown in Figure 3 was produced.

Subsequently, separators 33 and 35 were sandwiched between the prepared positive electrode 34 and the negative electrode 32, and a wound group 3 was prepared with a configuration as shown in Figure 3. The positive connection end 42 and the negative connection end 22 of the positive collector plate 44 and the negative collector plate 24 connected to the battery lid 6 and the uncoated portion (positive current collector exposed portion 34c and negative current collector exposed portion 32c) of the wound group 3 were welded, the wound group 3 was covered with an insulating protective film (not shown), the wound group 3 was sealed in the battery can 1, and the battery lid 6 and the battery can 1 were welded (refer to Figures 1 and 2).

Subsequently, a non-aqueous solvent containing cyclic carbonate (ethylene carbonate (EC)) and linear carbonate (ethyl methyl carbonate (EMC) and dimethyl carbonate (DMC)) and having a content ratio of cyclic carbonate and linear carbonate of 30 : 70 by volume was prepared. Next, an electrolytic solution was prepared by dissolving LiPF₆ as an electrolyte salt, and FSO₃Li (fluorosulfonate), CH₃OSO₃Li (methoxysulfonate), LiBOB (lithium borate), LiPO₂F₂ (difluorophosphate) and VC (vinylene carbonate (C₃H₂O₃)) as additives in the non-aqueous solvent. In this case, as shown in Table 1 below, the content of LiPF₆ (electrolyte salt) contained in the electrolytic solution was 1.2 mol/L, the content of FSO₃Li contained in the electrolytic solution was 1.0 mass%, the content of CH₃OSO₃Li contained in the electrolytic solution was 0.5 mass%, the content of LiBOB contained in the electrolytic solution was 0.4 mass%, the content of LiPO₂F₂ contained in the electrolytic solution was 1.0 mass%, and the content of VC contained in the electrolytic solution was 0.4 mass%. Next, the prepared electrolytic solution was injected into the battery can 1 from the liquid injection port 9 of the battery lid 6, and then the liquid injection port 9 was sealed with the injection port plug 11. Thereby the lithium ion secondary battery 100 was prepared.

### [Examples 2 and 3 and Comparative Examples 1 and 2]

Lithium ion secondary batteries 100 were prepared in the same manner as in Example 1 except that the content of each additive contained in the electrolyte was changed as shown in Table 1 below.

### [Evaluation]

The lithium ion secondary batteries prepared in Examples 1 to 3 and Comparative Examples 1 and 2 were initialized by charging and discharging, and then the respective characteristics were evaluated according to the following procedure. The evaluation results are shown in Table 2 below.

### <Obtaining curve of SOC to Open Circuit Voltage (OCV)>

In a lithium ion secondary battery disposed in a thermostatic chamber at 25 °C, the battery capacity was discharged from 4.2 V at a discharging current 1C in increments of 5 % of the battery capacity, and a voltage after a pause for one hour was defined as the OCV and then a curve of SOC to the open circuit voltage (OCV) was obtained.

### <Evaluation of Power Characteristics in Low SOC Range at Low Temperature>

First, in a lithium ion secondary battery disposed in a thermostatic bath at 25 °C, constant voltage-constant current charging (CC-CV charging) was performed at a charging current 1C from SOC 0% to SOC 25% in relation to a SOC-OCV curve. Next, the lithium ion secondary battery was allowed to stand in a thermostatic bath at -10 °C for 5 hours. After that, the lithium ion secondary batteries were discharged at a constant current of 9C for 10 seconds, and the voltage drop value caused by the discharge was measured. Then, the discharged DC resistance (DCR) at SOC 25% was obtained from the measured voltage drop value. The DCRs (relative value) at SOC 25% of the lithium ion secondary battery of respective Examples and Comparative Examples, normalized with the DCR at SOC 25% of the lithium ion secondary battery of Comparative Example 1 set to 100, are shown in Table 2 below. The lower the DCR, the more preferable. The lower the DCR at SOC 25 %, the lower the internal resistance of the lithium ion secondary battery in the low SOC range.

### <Evaluation of Characteristics Before and After High Temperature Storage>

First, in a lithium ion secondary battery disposed in a thermostatic chamber at 25 °C, CC-CV charge was performed at a charge current 1C for 2.5 hours until the battery voltage became 4.2 V. Then, after a pause for 30 minutes, constant current discharge (CC discharge) was performed at the discharge current 1C up to the battery-voltage 2.8 V, and the capacity (initial capacity) prior to the high temperature storage was determined. The capacities (relative values) of the lithium ion secondary batteries of respective Examples and respective Comparative Examples before the high temperature storage, normalized to the capacity (initial capacity) of the lithium ion secondary battery of Comparative Example 1 before the high temperature storage set to 100, are shown in Table 2 below. Furthermore, in the lithium ion secondary batteries arranged in the thermostatic bath at 25 °C, CC-CV charge was performed at a charge current 1C from SOC 0% to SOC 50%, in relation to SOC-OCV curve. Then, after a pause for 30 minutes, the lithium ion secondary battery was discharged for 10 seconds at a constant current of 30C to measure the voltage drop value due to the discharge, from the measured voltage drop value, the DCR at SOC 50% prior to high temperature storage was determined. The DCRs (relative value) at SOC 50% before the high temperature storage of the lithium ion secondary batteries of respective Examples and respective Comparative Examples, normalized to the DCR at SOC 50% before high-temperature storage of the lithium ion secondary battery of Comparative Example 1 set to 100, are shown in Table 2 below.

Subsequently, in the lithium ion secondary batteries disposed in the thermostatic bath at 25 °C, CC-CV charge was performed at a charge current 1C from SOC 0% to SOC 80%, in relation to SOC-OCV curve. Next, the lithium ion secondary battery was moved into the thermostatic bath at 70 °C and held for 100 days, and then the lithium ion secondary battery was taken out from the thermostatic bath at 70 °C and moved into the thermostatic bath at 25 °C. Thereafter, constant current discharge (CC discharge) was performed at a discharge current 1C up to the battery-voltage 2.8 V. Then, in the lithium ion secondary battery disposed in the thermostatic bath at 25 °C, CC-CV charge was performed at a charge current 1C for 2.5 hours until the battery voltage became 4.2 V. Then, after a pause for 30 minutes, constant current discharge (CC discharge) was performed at a discharge current 1C up to the battery-voltage 2.8 V, and the capacity after high temperature storage was determined. The capacities (relative values) of the lithium ion secondary batteries of respective Example and respective Comparative Example after the high temperature storage, normalized to the capacity of the lithium ion secondary battery of Comparative Example 1 after the high temperature storage set to 100, are shown in Table 2 below. Furthermore, in the lithium ion secondary batteries arranged in the thermostatic bath at 25 °C, CC-CV charge was performed at a charge current 1C from SOC 0% to SOC 50%, in relation to SOC-OCV curve. Then, after a pause for 30 minutes, the lithium ion secondary battery was discharged for 10 seconds at a constant current of 30C to measure the voltage drop value due to the discharge, from the measured voltage drop value, the DCR at SOC 50% after high temperature storage was determined. The DCRs (relative value) at SOC 50% after the high temperature storage of the lithium ion secondary batteries of each Example and each Comparative Example, normalized to the DCR at SOC 50% after the high temperature storage of the lithium ion secondary battery of Comparative Example 1 set to 100, are shown in Table 2 below.

### [Table 1]

**Table 1**

| | Negative Electrode Active Material A | | | Negative Electrode Active Material B | | | Amorphous Carbon Fine Particle Size [µm] | Electrolyte Composition | | | | | |
|---|---|---|---|---|---|---|---|---|---|---|---|---|---|
| | Content [mass%] | Number of Amorphous Carbon Particles Supported Per Unit Area [pcs./µm²] | Particle Size [µm] | Content [mass%] | Number of Amorphous Carbon Particles Supported Per Unit Area [pcs./µm²] | Particle Size [µm] | | Basic Composition | Additive Content [mass%] | | | | |
| | | | | | | | | | FSO₃Li | CH₃OSO₃Li | LiBOB | LiPO₂F₂ | VC |
| Example 1 | 49 | 0 | 7 | 49 | 1.8 | 7 | 0.2 | 1.2M LiPF₆ EC:EMC+DMC =30:70 | 1.0 | 0.5 | 0.4 | 1.0 | 0.4 |
| Example 2 | 49 | 0 | 7 | 49 | 1.8 | 7 | 0.2 | | 0.8 | 0.5 | 0.4 | 1.0 | 0.4 |
| Example 3 | 49 | 0 | 7 | 49 | 1.8 | 7 | 0.2 | | 0.9 | 0.5 | 0.4 | 1.0 | 0.4 |
| Comparative Example 1 | 49 | 0 | 7 | 49 | 1.8 | 7 | 0.2 | | 1.0 | - | 0.4 | 1.0 | 0.4 |
| Comparative Example 2 | 49 | 0 | 7 | 49 | 1.8 | 7 | 0.2 | | - | 0.5 | 0.4 | 1.0 | 0.4 |

### [Table 2]

**Table 2**

| | Low SOC Range Power Characteristics | Characteristics Before and After High Temperature Storage | | | |
|---|---|---|---|---|---|
| | | Before High Temperature Storage | | After High Temperature Storage | |
| | DCR at SOC 25 % (Relative Value) | Capacity (Relative Value) | DCR at SOC 50 % (Relative Value) | Capacity (Relative Value) | DCR at SOC 50 % (Relative Value) |
| Example 1 | 97 | 100 | 100 | 116 | 69 |
| Example 2 | 98 | 100 | 99 | 114 | 71 |
| Example 3 | 97 | 100 | 100 | 116 | 70 |
| Comparative Example 1 | 100 | 100 | 100 | 100 | 100 |
| Comparative Example 2 | 98 | 99 | 100 | 112 | 73 |

### <Discussion>

Table 1 and Table 2 show the compositions and evaluation results of the electrolytes of the lithium ion secondary batteries of the respective Examples and Comparative Examples. As shown in Tables 1 and 2, it is suggested that Examples 1 and 2 can achieve both a reduction in the DCR in the low SOC range and an improvement in high temperature storage properties (capacity retention and DCR retention). On the other hand, in Comparative Examples 1 and 2, the high temperature storage characteristics are deteriorated, and it is considered that both reduction of the DCR in the low SOC range and improvement of the high temperature storage characteristics cannot be achieved.

Therefore, it is possible to provide a lithium ion secondary battery having high power in the low SOC range and good high temperature storage properties by employing the electrolytic solution of the present disclosure as the electrolytic solution of the lithium ion secondary battery.

Those skilled in the art can use the above description to make full use of the present disclosure. The claims and embodiments disclosed herein are merely illustrative and exemplary and should not be construed to limit the scope of the disclosure in any way. Modifications may be made to the details of the above-described embodiments with the aid of the present disclosure without departing from the basic principles of the disclosure. In other words, various modifications and improvements of the embodiments specifically disclosed in the above specification are within the scope of the present disclosure.

### Reference Signs List

1: battery can, 1a: opening, 1b: wide side surface, 1c: narrow side surface, 1d: bottom surface, 3: wound group, 5: gasket, 6: battery lid, 7: insulating plate, 9: liquid injection port, 10: gas discharge valve, 11: liquid injection port plug, 12: negative external terminal, 12a: negative electrode connecting portion, 14: positive external terminal, 14a: positive electrode connecting portion, 21: negative current collector plate base, 22: negative connection end, 23: negative electrode side opening hole, 24: negative collector plate, 26: negative electrode side through hole, 32: negative electrode, 32a: negative current collector, 32b: negative electrode mixture layer, 32c: negative current collector exposed portion, 33: separator, 34: positive electrode, 34a: positive current collector, 34b: positive electrode mixture layer, 34c: positive current collector exposed portion, 35: separator, 41: positive current collector plate base, 42: positive connection end, 43: positive electrode side opening hole, 44: positive collector plate, 46: positive electrode side through hole, 50: graphite particles (A), 52: graphite particles (B) on which amorphous carbon fine particles are supported, 54: graphite particles, 56: amorphous carbon fine particles, 100: lithium ion secondary battery.

## Claims

1. A lithium ion secondary battery comprising:
a positive electrode; a negative electrode; and an electrolytic solution,
wherein the negative electrode includes a current collector and a negative electrode active material layer disposed on at least one side of the current collector,
the negative electrode active material layer includes a negative electrode active material including graphite particles and amorphous carbon fine particles,
the electrolytic solution includes at least a non-aqueous solvent, an electrolyte salt, and an additive,
and the additive includes a fluorosulfonate and a methoxysulfonate.

2. The lithium ion secondary battery according to claim 1,
wherein the additive further contains a lithium borate and a difluorophosphate.

3. The lithium ion secondary battery according to claim 2,
wherein the lithium borate is lithium bis(oxalate)borate (LiBOB), and the difluorophosphate is lithium difluorophosphate.

4. The lithium ion secondary battery according to claim 2 or 3,
wherein the additive further contains a vinylene carbonate compound.

5. The lithium ion secondary battery according to any one of claims 1 to 3,
wherein the non-aqueous solvent contains at least a cyclic carbonate and a chain carbonate, and the content ratio of the cyclic carbonate and the chain carbonate contained in the non-aqueous solvent is from 10 : 90 to 50 : 50 in volume ratio.

6. The lithium ion secondary battery according to claim 5,
wherein the non-aqueous solvent contains ethylene carbonate as the cyclic carbonate, and ethyl methyl carbonate and dimethyl carbonate as the linear carbonate.

7. The lithium ion secondary battery according to any one of claims 1 to 3,
wherein the electrolyte salt is lithium hexafluorophosphate.

8. The lithium ion secondary battery according to any one of claims 1 to 3,
wherein the content of the fluorosulfonate contained in the electrolytic solution is 0.3 mass% to 1.5 mass%.

9. The lithium ion secondary battery according to any one of claims 1 to 3,
wherein the content of the methoxysulfonate contained in the electrolytic solution is 0.5 mass% or less.

10. The lithium ion secondary battery according to any one of claims 1 to 3,
wherein the amorphous carbon fine particles are supported on the graphite particles.

11. The lithium ion secondary battery according to claim 10,
wherein the negative electrode active material contains graphite particles (A) and graphite particles (B) on which the amorphous carbon fine particles are supported as the graphite particles.

12. The lithium ion secondary battery according to any one of claims 1 to 3,
wherein an average particle diameter of the amorphous carbon fine particles is 0.05 µm or more and 0.5 µm or less.

13. The lithium ion secondary battery according to any one of claims 1 to 3,
wherein the positive electrode includes a current collector and a positive electrode active material layer disposed on at least one surface of the current collector, and
the positive electrode active material layer includes a positive electrode active material containing a ternary material containing at least nickel, cobalt, and manganese.
